# EUROPEAN PATENT SPECIFICATION

(11) **EP 1 024 055 B1**
(45) Date of publication and mention of the grant of the patent: **10.09.2003**
(21) Application number: 99125652.0
(22) Date of filing: 22.12.1999
(51) Int. Cl.: B60R 16/00, B60R 16/02

(54) **Steering column switch assembly including an antenna coil**
Lenkstockschalteranordnung mit Antennenspule
Ensemble d'interrupteur de colonne de direction comprenant une bobine d'antenne

(30) Priority: 27.01.1999 JP 1815199
(43) Date of publication of application: 02.08.2000
(73) Proprietor: Kabushiki Kaisha Tokai-Rika-Denki-Seisakusho, Niwa-gun, Aichi-ken 480-0195 (JP)
(72) Inventor: Shioda, Kazuya, c/o K.K.Tokai Rika Denki Seisakush, Oguchi-cho, Niwa-gun (JP); Ito, Hiroyasu, c/o K.K.Tokai Rika Denki Seisakusho, Oguchi-cho, Niwa-gun (JP)
(74) Representative: Grünecker, Kinkeldey, Stockmair & Schwanhäusser Anwaltssozietät

(56) References cited:
- EP-A- 0 834 841
- EP-A- 0 887 234
- DE-A- 4 437 024
- DE-A- 19 631 305
- DE-A- 19 642 616
- DE-A- 19 700 175
- US-A- 4 697 092

## Description

### BACKGROUND OF INVENTION

### Field of Invention

This invention relates to a combination switch assembly disposed around a steering wheel in a vehicle according to the preamble of claim 1, as known by DE-A-19 642 616.

### Related art

In some vehicles, a transmitter is incorporated in an engine ignition key so that signals for locking and unlocking doors may be transmitted from the transmitter. In such a construction, an antenna coil is mounted on a door trim and the doors are adapted to be locked and unlocked by receiving the door locking and unlocking signals through the antenna coil. However, it is difficult to mount the antenna coil on the door trim and it is also difficult for the antenna coil to receive the door locking signal or the like for a positional reason. Therefore, this construction is to be further improved with respect to assembling workability and signal receiving ability of the antenna coil.

### SUMMARY OF INVENTION

This invention has been made in view of the above described circumstances, and it is an object of the invention to provide a combination switch assembly in which both the assembling workability and the signal receiving ability of the antenna coil are increased.

A combination switch assembly according to the invention comprises the features defined in claim 1.

According to the above described means, in case where the switch unit and the sensor unit are disposed around the steering wheel, the antenna coil will be also disposed around the steering wheel. This can avoid an assembling work exclusively for the antenna coil, and enhance the assembling workability of the antenna coil. Moreover, this will avoid necessity of an exclusive board for holding the antenna coil, and the radio wave signal can be easily received for the positional reason.

### BRIEF DESCRIPTION OF DRAWINGS

Fig. 1 is a perspective view of the combination switch assembly of the present invention in an exploded state;
Fig. 2 is a perspective view of the printed wiring board;
Fig. 3 is a view corresponding to Fig. 1 showing the second embodiment of the invention;
Fig. 4 is a view corresponding to Fig. 1 showing the third embodiment of the invention; and
Fig. 5 is a perspective view of the circuit board of an embodiment which is not covered by the claims.

### DETAILED DESCRIPTION OF PREFERRED EMBODIMENTS

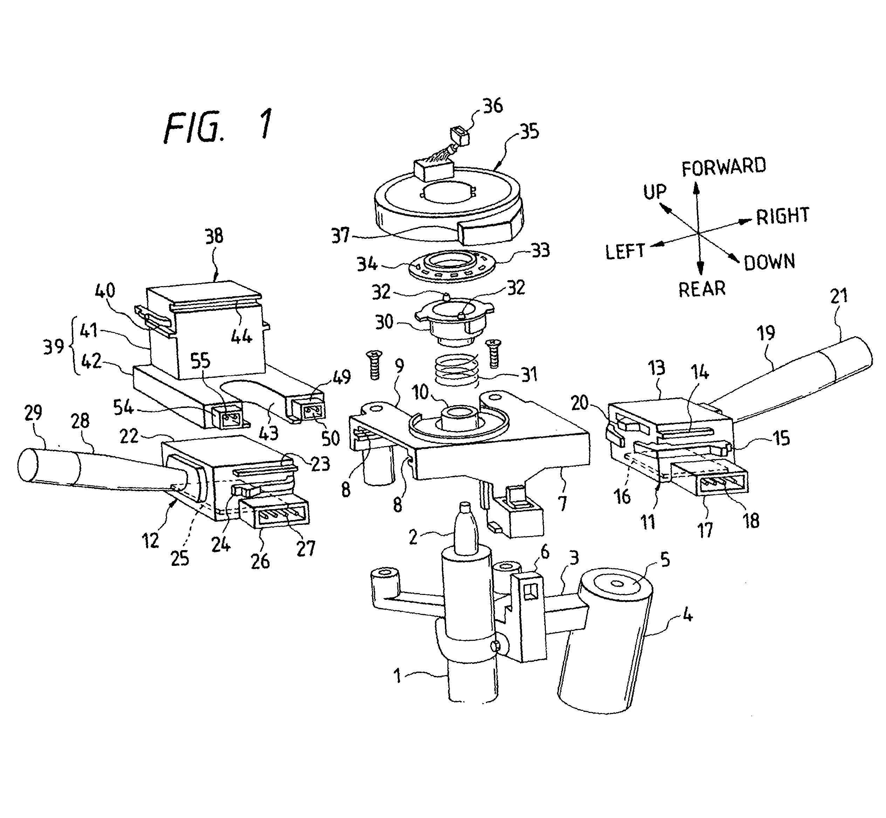

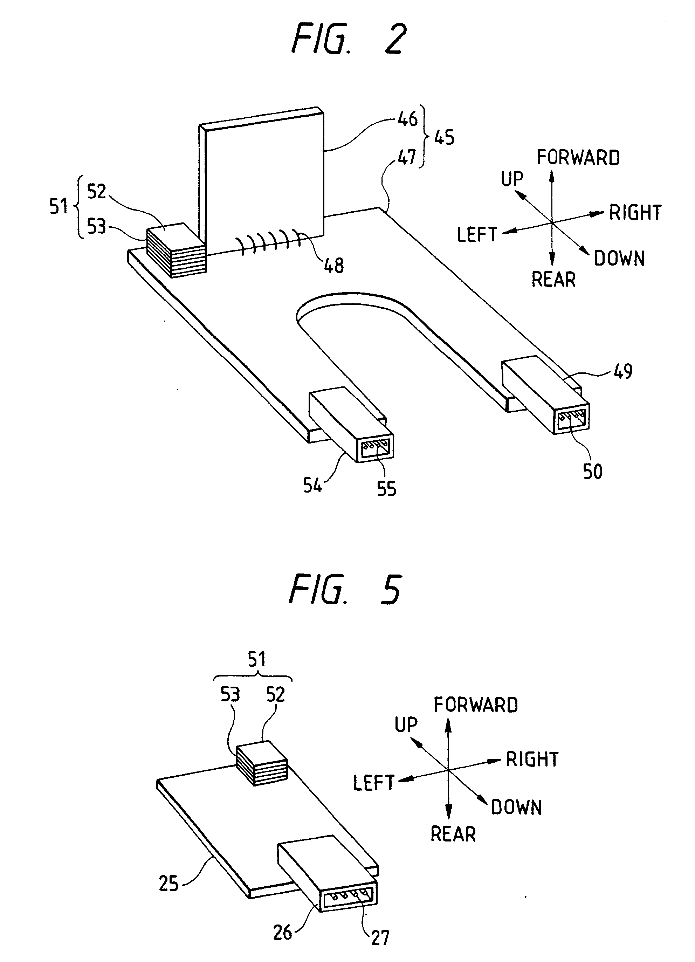

Now, a first embodiment of the invention will be described with reference to Figs. 1 and 2. Fig. 1 is a perspective view showing the combination switch assembly in an exploded state. A cross-shaped arrow mark shows vertical, lateral and longitudinal directions when the combination switch assembly has been mounted on the vehicle. In the drawings, a steering column tube 1 is provided in front of a driver's seat in the vehicle. A steering shaft 2 is rotatably contained in the steering column tube 1. A steering lock 3 is fixed to an outer peripheral face of the steering column tube 1. In the steering lock 3 is formed a cylinder containing part 4 in a columnar shape in which an ignition key cylinder 5 is contained.

The steering lock 3 contains a locking mechanism (not shown). When an engine starting key (not shown) is inserted into the ignition key cylinder 5 and rotated to a "LOCK position", the locking mechanism starts to operate to block rotation of the steering shaft 2 by the locking mechanism. A transmitter (not shown) is incorporated in the key. The transmitter is adapted to send by radio wave ID codes, door locking signals, door unlocking signals, etc.

The steering lock 3 is provided with a protuberant portion 6 for holding a body 7. The body 7 is formed with two laterally extending grooves 8, a rectangular cut away part 9, and a cylindrical shaft inserting part 10. Into the shaft inserting part 10 is inserted a distal end of the steering shaft 2 so as to pass through. To the distal end of the steering shaft 2 is fixed a steering wheel (not shown).

A switch unit 11 for light, turn and dimmer switches and a switch unit 12 for a wiper, a washer and a rear wiper are detachably attached to the body 7. The switch units 11 and 12 will be respectively described hereunder.

### Switch unit 11 for the light, turn and dimmer switches

Into the respective grooves 8 of the body 7 are detachably inserted plate portions 14 of a switch case 13 from the right side. This switch case 13 is formed with two locking pieces 15 (only one is shown). The locking pieces 15 engage with an inner face of the body 7 to prevent the switch case 13 from being extracted out of the body 7.

A circuit board 16 is contained inside the switch case 13. The dimmer switch, the turn switch and the light switch (all are not shown) are mounted on the circuit board 16. A connector 17 is mechanically and electrically connected to the circuit board 16, and to the connector 17 is mechanically and electrically connected a mating connector (not shown). The connector 17 projects downwardly from the switch case 13 and has a plurality of connector terminals 18.

An operating lever 19 is mounted on the switch case 13 so as to swing in an upward direction, in a downward direction and in a forward direction from a neutral position. The operating lever 19 acts to actuate the dimmer switch and the turn switch. When the operating lever 19 is operated in the forward direction, condition of the dimmer switch will be shifted. Then, an operating power is applied to high beam head lamps (not shown) through the dimmer switch and the connector 17.

When the operating lever 19 is operated in the upward and downward directions from the neutral position, condition of the turn switch will be shifted. Then, a turn signal is applied to a turn signal control circuit (not shown) through the turn switch and the connector 17. The turn signal control circuit actuates and controls a turn indicating lamp for a left turn or a turn indicating lamp for a right turn (both are not shown) on the basis of the turn signal. Numeral 20 designates a ratchet for restoring the operating lever 19 to the neutral position from the operative positions in the upward and downward directions.

To the distal end of the operating lever 19 is attached a knob 21 so as to rotate around an axial core line of the operating lever 19. This knob 21 acts to operate the light switch. When the knob 21 is operated, condition of the light switch will be shifted. Then, the operating power is applied to either of small head lamps, low beam head lamps and high beam head lamps (all are not shown) through a battery and the light switch.

It is to be noted that the operating lever 19 and the knob 21 constitute the operating members. On the other hand, the small head lamps, the low beam head lamps, the high beam head lamps, the left turn indicating lamp and the right turn indicating lamp constitute vehicle loads. The switch unit 11 is so constructed as described above.

### Switch unit 12 for the wiper, the washer and the rear wiper

Into the grooves 8 of the body 7 are detachably inserted plate portions 23 of a switch case 22 from the left side. This switch case 22 is formed with two locking pieces 24 (only one is shown). The locking pieces 24 engage with an inner face of the body 7 to prevent the switch case 22 from being extracted out of the body 7.

A circuit board 25 is contained inside the switch case 22. A front wiper switch, a washer switch and a rear wiper switch (all are not shown) are mounted on the circuit board 25. A connector 26 is mechanically and electrically connected to the circuit board 25, and to the connector 26 is mechanically and electrically connected a mating connector (not shown). The connector 26 projects downwardly from the switch case 22 and has a plurality of connector terminals 27.

An operating lever 28 is mounted on the switch case 22 so as to swing in a downward direction and in a forward direction from a neutral position. The operating lever 28 acts to operate the front wiper switch and the washer switch. When the operating lever 28 is operated in the forward direction from the neutral position, condition of the washer switch will be shifted. Then, a washer signal is applied to a washer control circuit (not shown) through the connector 26. The washer control circuit actuates and controls a washer pump (not shown) on the basis of the washer signal.

When the operating lever 28 is operated in the downward direction from the neutral position, condition of the front wiper switch will be shifted. Then, either of an intermittent actuating signal (INT signal), a low speed actuating signal, a high speed actuating signal is applied to a front wiper control circuit (not shown) from the front wiper switch through the connector 26. The front wiper control circuit actuates and controls a front wiper motor (not shown) on the basis of the intermittent actuating signal, the low speed actuating signal, and the high speed actuating signal.

To the distal end of the operating lever 28 is attached a knob 29 so as to rotate around an axial core line of the operating lever 28. This knob 29 acts to operate the rear wiper switch. When the knob 29 is operated, condition of the rear wiper switch will be shifted. Then either of an intermittent actuating signal (INT signal), a low speed actuating signal, and a high speed actuating signal is applied to a rear wiper control circuit (not shown) from the rear wiper switch through the connector 26. The rear wiper control circuit actuates and controls a rear wiper motor (not shown) on the basis of the intermittent actuating signal, the low speed actuating signal, and the high speed actuating signal.

It is to be noted that the operating lever 28 and the knob 29 constitute the operating members. On the other hand, the front wiper motor, the rear wiper motor and the washer pump constitute the vehicle loads. The switch unit 12 is so constructed as described above.

A canceling cam 30 is mounted around the steering shaft 2 in front of the body 7. The body 7 holds a push spring 31 around the shaft inserting part 10. The push spring 31 pushes forward the canceling cam 30 by its spring force.

The canceling cam 30 is formed with two pins 32 which are fitted in a hole (not shown) in the steering wheel by means of the spring force of the push spring 31. These pins 32 act to connect the canceling cam 30 to the steering wheel. When the steering wheel is operated during the vertical operation of the right hand operating lever 19, the canceling cam 30 kicks the ratchet 20. Then the ratchet 20 presses the operating lever 19 to restore it to the neutral position.

A disk 33 is connected to the steering wheel. This disk 33 rotates with the rotation of the steering wheel unitedly, and is formed with a plurality of through holes 34 equidistantly in a circumferential direction. The body 7 also has a roll connector unit 35. This roll connector unit 35 is mainly composed of a flat cable which is wound in a cylindrical shape. An inner peripheral part of the flat cable is connected to the steering wheel side (an air bag, for example) by way of a connector 36, while an outer peripheral part of the flat cable is connected to an on-vehicle ECU or the like by way of a connector 37.

A sensor unit 38 for detecting a steering angle is detachably held by the body 7. The three units, namely, the sensor unit 38, the switch unit 11 and the switch unit 12 are united by means of the body 7. The sensor unit 38 will be described hereunder.

### Sensor unit 38

Both side edges of the cut away part 9 of the body 7 are detachably engaged with grooves 40 of a sensor case 39. This sensor case 39 consists of a first case 41 in a shape of a rectangular box and a second case 42 in a shape of a flat plate. The first case 41 is held within the cut away part 9 and the second case 42 is held below both the switch units 11 and 12.

The second case 42 is formed with a cut away relief 43 into which the steering column tube 1 is inserted. The first case 41 is formed with a laterally extending groove 44 into which the disk 33 is rotatably inserted.

A printed wiring board (PC plate) 45 corresponding to a circuit board is encased in the sensor case 39 as shown in Fig. 2. This PC plate 45 is divided into a first printed wiring board (first PC plate) 46 located in the first case 41 and a second printed wiring board (second PC plate) 47 located in the second case 42. The first PC board 46 and the second PC board 47 are electrically connected with each other by way of a plurality of jumper wires 48.

On the first case 41 is mounted a plurality of photo-interrupters (not shown). Each of the photo-interrupters includes a light emitting diode and a light receiving element which face with each other in the longitudinal direction at both sides of the groove 44 . The light emitting diode projects a light on the disk 33, and the light receiving element detects the light which has passed through the through holes 34 and outputs a light receiving signal.

On the first PC plate 46 is mounted a steering angle sensor circuit (SAS circuit). The SAS circuit is mainly composed of a plurality of photo-interrupters and a signal processing circuit which processes output signals from a plurality of the photo-interrupters. When the disk 33 is rotated along with the rotation of the steering wheel, the SAS circuit will output pulse signals in proportion to rotation amount and rotation direction of the steering wheel.

As shown in Fig. 2, a connector 49 for the SAS circuit is mechanically and electrically connected to the second PC plate 47. The SAS connector 49 has a plurality of connector terminals 50. A mating connector (not shown) is mechanically and electrically connected to the SAS connector 49, and the output signal from the SAS circuit is applied to the ECU through the jumper wires 48, the second PC plate 47, the SAS connector 49 and the mating connector.

A vehicle antenna 51 is mounted on an upper end part of the second PC plate 47 so as to be mechanically and electrically connected to the second PC plate 47. The vehicle antenna 51 consists of a bobbin 52 and an antenna coil 53 which is wound around the bobbin 52. Radio wave signals transmitted from the transmitter in the key are received by the antenna coil 53.

An antenna connector 54 is mechanically and electrically connected to the second PC plate 47. This antenna connector 54 has a plurality of connector terminals 55. A mating connector (not shown) is mechanically and electrically connected to the antenna connector 54. The signal received by the antenna coil 53 is given to a keyless controller (not shown) through the antenna connector 54 and the mating connector.

The keyless controller includes a signal processing circuit and a microcomputer. The former signal processing circuit serves to amplify, demodulate and wave-shape the signal received by the antenna coil 53 to give it to the microcomputer. The microcomputer detects an ID code, the door locking signal and the door unlocking signal, and compares the ID code with a recorded code. Then, only in case where both the codes are identical, an on-vehicle door locking mechanism (not shown) is controlled to be actuated, and the door will be locked or unlocked.

In the above described first embodiment, because the antenna coil 53 is mounted on the PC plate 45 of the sensor unit 38, at the same time when the body 7 is assembled to the steering lock 3, the antenna coil 53 will be positioned around the steering wheel. This can eliminate the exclusive assembling work of the antenna coil 53, and the assembling workability of the antenna coil 53 will be enhanced. Moreover, since the radio wave signals transmitted from the key will be less obstructed by the vehicle body and can be easily received by the antenna coil 53 through a front glass, etc., the signal receiving ability of the antenna coil 53 will be improved for the positional reason. Further, an electrical structure will be simplified, because this arrangement can eliminate necessity of the exclusive board for holding the antenna coil 53.

The PC plate 45 is divided into the first PC plate 46 and the second PC plate 47. For this reason, the embodiment can easily meet with difference in type of the vehicles, because only the second PC plate 47 can be utilized in the vehicle of the type which requires the antenna coil 53 but does not require the SAS circuit.

Further, the antenna coil 53 is mounted on the upper end part of the second PC plate 47 which is the closest area in the second PC plate 47 to the front glass. Therefore, the signal receiving ability of the antenna coil 53 will be much more improved in view of the position.

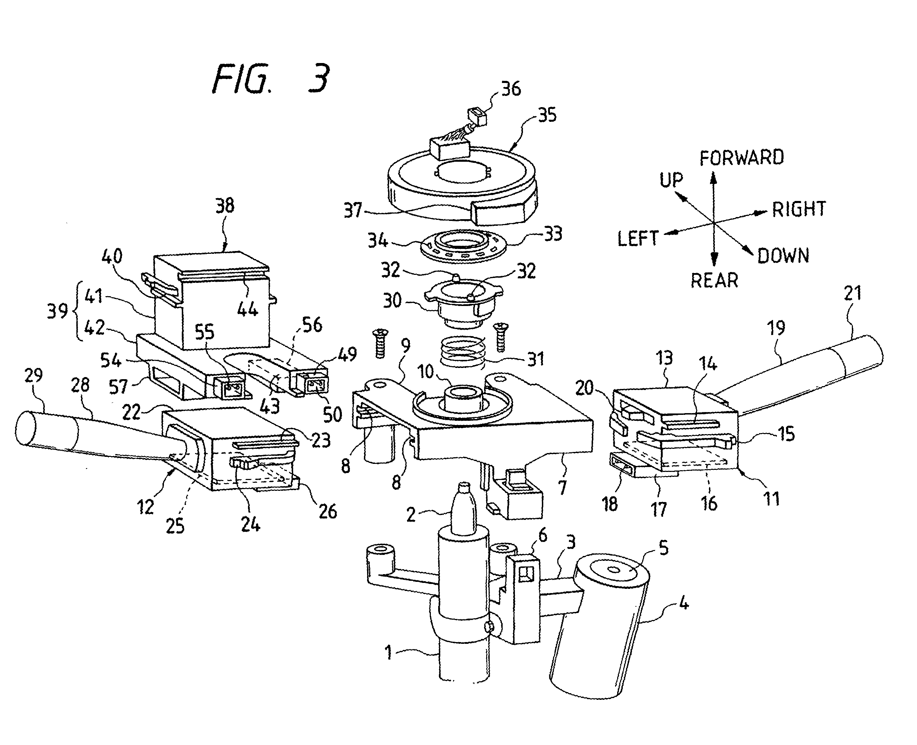

Now, the second embodiment according to the invention will be described referring to Fig. 3. The same members as those in the first embodiment will be denoted with the same reference numerals and signs to omit a further explanation. Explanation will be made hereunder on different members only. A connector 56 having a plurality of connector terminals (not shown) is mechanically and electrically connected to the second PC plate 47 in the sensor unit 38. To this connector 56 is mechanically and electrically connected the connector 17 of the right hand switch unit 11. The turn signal or the like outputted from the circuit board 16 in the switch unit 11 is applied to the PC plate 45 in the sensor unit 38 from the connector 17 through the connector 56.

A connector 57 having a plurality of connector terminals (not shown) is mechanically and electrically connected to the second PC plate 47 in the sensor unit 38. To this connector 57 is mechanically and electrically connected the connector 26 of the left hand switch unit 12. The washer signal, the intermittent signal, the low speed actuating signal, the high speed actuating signal or the like outputted from the circuit board 25 in the switch unit 12 is applied to the PC plate 45 in the sensor unit 38 from the connector 26 through the connector 57.

On the PC plate 45 in the switch unit 38 is mounted a CPU (not shown) for multiplexed communication. The turn signal, the washer signal, the intermittent signal, the low speed actuating signal, the high speed actuating signal or the like are applied to the CPU through the PC plate 45. The CPU is electrically connected to the ECU by way of the SAS connector 49 so as to multiplex and transmit the turn signal, the washer signal, the intermittent signal, the low speed actuating signal, the high speed actuating signal or the like to the ECU.

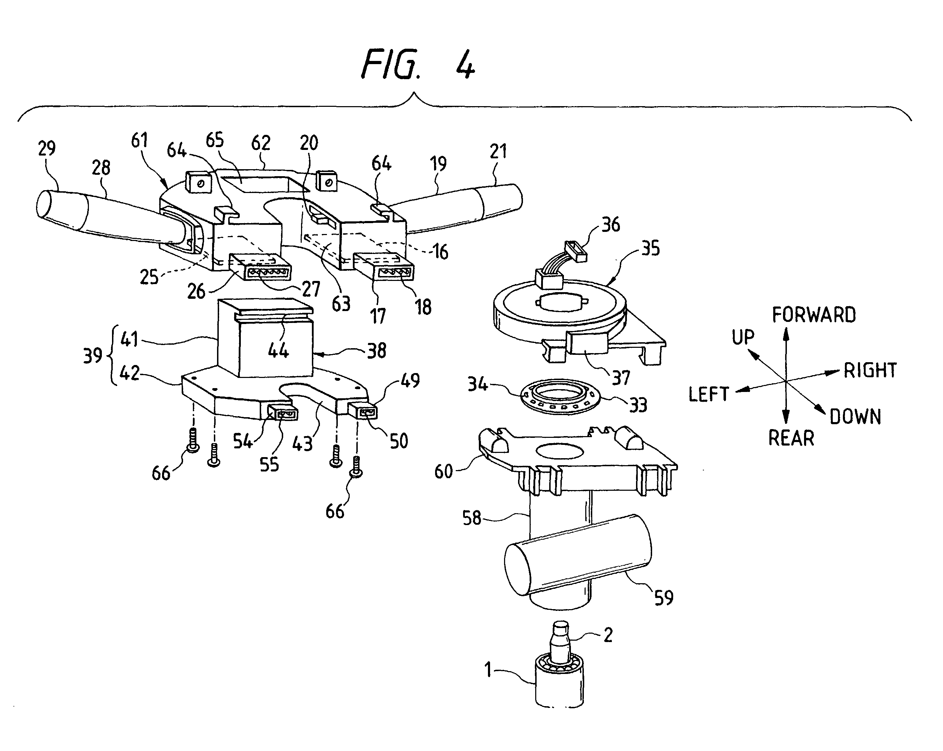

Now, the third embodiment according to the invention will be described referring to Fig. 4. The same members as those in the first embodiment will be denoted with the same reference numerals and signs to omit a further explanation. Explanation will be made hereunder on different members only. A steering lock 58 is fixed to an outer peripheral face of the steering column tube 1. The steering lock 58 has a cylinder containing part 59 in a columnar shape in which the ignition key cylinder 5 is contained.

A locking mechanism (not shown) is contained in the steering lock 58. When an engine starting key (not shown) is inserted into the ignition key cylinder 5 and rotated to the "LOCK position", the locking mechanism starts to operate to block the rotation of the steering shaft 2 by the locking mechanism. The steering lock 58 is provided with a body 60 in a form of a flat plate by which a switch unit 61 is detachably held. The switch unit 61 will be described hereunder.

A horseshoe shaped switch case 62 has a cut away part 63 and two L-shaped holding portions 64. The body 60 is detachably inserted into the holding portions 64. A right side part of the switch case 62 contains the circuit board 16 for the light, turn and dimmer switches and the ratchet 20, while a left side part of the switch case 62 contains the circuit board 25 for the wiper, the washer and the rear wiper.

The operating lever 19 is mounted on the right side part of the switch case 62. In association with the operation of the operating lever 19 and the knob 21, the small head lamps, the low beam head lamps, the high beam head lamps, the left turn indicating lamp and the right turn indicating lamp will be turned on. The operating lever 28 is mounted on the left side part of the switch case 62. In association with the operation of the operating lever 28 and the knob 29, the front wiper motor, the washer pump, and the rear wiper motor will be actuated.

The switch case 62 is provided with a rectangular through hole 65 in which the first case 41 of the sensor unit 38 is inserted so as to pass through. A plurality of screws 66 are threaded into the switch case 62 through the second case 42 of the sensor unit 38, and so, the sensor unit 38 is rigidly united with the switch unit 61 by means of a plurality of the screws 66.

In the above described first through third embodiments, the antenna coil 53 is mounted on the upper end part of the second PC plate 47. However, this invention is not limited to such an arrangement. For example, the antenna coil 53 may be mounted on a lower end part of the second PC plate 47 or on the first PC plate 46.

Now, a further embodiment will be described referring to Fig. 5. The same members as those in the first embodiment will be denoted with the same reference numerals and signs to omit a further explanation. Explanation will be made hereunder on different members only. On the circuit board 25 in the switch unit 12 for the wiper, the washer and the rear wiper is mounted the vehicle antenna 51 at the upper end part thereof so as to be mechanically and electrically connected to the circuit board 25. The signal received by the antenna coil 53 is given to the keyless controller from the circuit board 25 through the connector 26 and the mating connector.

In the above described embodiment, because the antenna coil 53 is mounted on the circuit board 25 in the switch unit 12, at the same time when the body 7 is assembled to the steering lock 3, the antenna coil 53 will be positioned around the steering wheel. This can eliminate the exclusive assembling work of the antenna coil 53, and the assembling workability of the antenna coil 53 will be improved. Moreover, since the radio wave signals will be easily received by the antenna coil 53 through the front glass, etc., the signal receiving ability of the antenna coil.53 will be improved for the positional reason. Further, the electric structure will be simplified because the exclusive board for the antenna coil 53 has become unnecessary.

Further, the antenna coil 53 is mounted on the upper end part of the circuit board 25 which is the closest area in the circuit board 25 to the front glass. Therefore the signal receiving ability of the antenna coil 53 will be much more improved in view of the position.

In the embodiment, the antenna coil 53 is mounted on the upper end part of the circuit board 25. The antenna coil 53 may be mounted on a lower end part of the circuit board 25.

Also in the embodiment, the antenna coil 53 is mounted on the circuit board 25 for the wiper, the washer and the rear wiper. However, the antenna coil 53 may be mounted on the circuit board 16 for the light, turn and dimmer switches so that the signals received by the antenna coil 53 may be applied to the keyless controller from the circuit board 16 through the connector 17 and the mating connector. In this case, it is preferable to mount the antenna coil 53 on the upper end part of the circuit board 16.

## Claims

1. combination switch assembly comprising
- a switch unit (11,12) disposed around a steering wheel and including operating members (19,21,28,29) for operating vehicle loads;
- a sensor unit (38) rigidly connected to said switch unit (11,12) and adapted to detect a rotation amount of said steering wheel; and
- an antenna Coil (53) (51) for receiving radio wave signals
**characterised in that**
- the sensor unit (38) comprises a sensor case (39) which is constituted of a box-shaped first case (41) and a flat plate second case (42);
- a first printed wiring board (46) is located within the first case (41) and a second printed wiring board (47) is provided within the second case (42);
- the vehicle antenna Coil (53) (51) is mounted on one of the first and second printed wiring boards (46,47);
- a cut away first relief (43) is formed through the second case (42);
- a second relief corresponding to the first relief (43) is formed through the second printed wiring board (47) wherein the first and second reliefs (43) are adapted such that a steering column tube (1) can be inserted in the reliefs (43); and
- a steering angle sensor connector (49) and an antenna connector (54) are disposed on the second printed wiring board (47) on opposite sides of the second relief, respectively.

2. Combination switch assembly according to claim 1, **characterised in that** the first case (41) is formed with a laterally extending groove (44) into which a disc (33) having a plurality of through holes (34) arranged equidistantly in the circumferential direction can be rotatably inserted which is connected to the steering wheel.

3. Combination switch assembly according to claim 2, **characterised in that** a plurality of photointerrupters are mounted in the first case (41), each including a light emitting diode and a light receiving element which face each other in the longitudinal direction at both sides of the groove.

4. Combination switch assembly according to at least one of claims 1-3, **characterised in that** the antenna (51) is mounted on an upper or a lower end part of the second printed wiring board (47).

5. Combination switch assembly according to at least one of claims 1-4, **characterised in that** the antenna (51) consists of a bobbin (52) and an antenna coil (53) wound around the bobbin (52).

6. Combination switch assembly according to at least one of claims 1-5, **characterised in that** further connectors (56,57) for mechanical and electrical connection with respective connectors (17,26) of the switch unit (11,12) are mechanically and electrically connected to the second printed wiring board (47).

7. Combination switch assembly according to claim 6, **characterised in that** a CPU for multiplexed communication is mounted on the second printed wiring boards (46,47).

8. Combination switch assembly according to at least one of claims 1-5, **characterised in that** the switch unit (11,12) comprises a horseshoeshaped switch case (62) which has a cut away part (63) for insertion of the steering column tube (1) and a rectangular through hole (65) in which the first case (41) is inserted.

## Patentansprüche

1. Kombinationsschalteranordnung, die umfasst:
eine Schalteinheit (11, 12), die um ein Lenkrad herum angeordnet ist und Betätigungselemente (19, 21, 28, 29) zum Betätigen von Fahrzeug-Lasten enthält;
eine Sensoreinheit (38), die starr mit der Schalteinheit (11, 12) verbunden und so eingerichtet ist, dass sie einen Drehgrad des Lenkrades erfasst; und
eine Antennenspule (53) zum Empfangen von Funkwellensignalen,
**dadurch gekennzeichnet, dass**:
die Sensoreinheit (38) ein Sensorgehäuse (39) umfasst, das aus einem kastenförmigen ersten Gehäuse (41) und einem flachen plattenförmigen zweiten Gehäuse (42) besteht;
sich eine erste Leiterplatte (46) in dem ersten Gehäuse (41) befindet und sich eine zweite Leiterplatte (47) in dem zweiten Gehäuse (42) befindet;
die Fahrzeug-Antennenspule (53) auf der ersten oder der zweiten Leiterplatte (46, 47) angebracht ist;
ein weggeschnittenes erstes Relief (43) durch das zweite Gehäuse (42) hindurch ausgebildet ist;
ein zweites Relief, das dem ersten Relief (43) entspricht, durch die zweite Leiterplatte (47) hindurch ausgebildet ist, wobei das erste und das zweite Relief (43) so angepasst sind, dass ein Lenksäulenrohr (1) in die Reliefs (43) eingeführt werden kann; und
ein Lenkwinkelsensor-Verbinder (49) und ein Antennenverbinder (54) auf der zweiten Leiterplatte (47) jeweils an einander gegenüberliegenden Seiten des zweiten Reliefs angeordnet sind.

2. Kombinationsschalteranordnung nach Anspruch 1, **dadurch gekennzeichnet, dass** das erste Gehäuse (41) mit einer sich quer erstreckenden Nut (44) versehen ist, in die eine Scheibe (33) mit einer Vielzahl von Durchgangslöchem (34), die in gleichen Abständen in der Umfangsrichtung angeordnet sind, die mit dem Lenkrad verbunden ist, drehbar eingeführt werden kann.

3. Kombinationsschalteranordnung nach Anspruch 2, **dadurch gekennzeichnet, dass** eine Vielzahl von Fotounterbrechem in dem ersten Gehäuse (41) angebracht sind, die jeweils eine Leuchtdiode und ein Lichtempfangselement enthalten, die in der Längsrichtung an beiden Seiten der Nut einander zugewandt sind.

4. Kombinationsschalteranordnung nach wenigstens einem der Ansprüche 1-3, **dadurch gekennzeichnet, dass** die Antenne (51) an einem oberen oder einem unteren Endteil der zweiten Leiterplatte (47) angebracht ist.

5. Kombinationsschalteranordnung nach wenigstens einem der Ansprüche 1-4, **dadurch gekennzeichnet, dass** die Antenne (51) aus einem Spulenkörper (52) und einer Antennenspule (53) besteht, die um den Spulenkörper (52) herum gewickelt ist.

6. Kombinationsschalteranordnung nach wenigstens einem der Ansprüche 1-5, **dadurch gekennzeichnet, dass** weitere Verbinder (56, 57) zur mechanischen und elektrischen Verbindung mit entsprechenden Verbindern (17, 26) der Schalteinheit (11, 12) mechanisch und elektrisch mit der zweiten Leiterplatte (47) verbunden sind.

7. Kombinationsschalteranordnung nach Anspruch 6, **dadurch gekennzeichnet, dass** eine CPU für Multiplexkommunikation auf den Leiterplatten (46, 47) angebracht ist.

8. Kombinationsschalteranordnung nach wenigstens einem der Ansprüche 1-5, **dadurch gekennzeichnet, dass** die Schalteinheit (11, 12) ein hufeisenförmiges Schaltergehäuse (62) umfasst, das einen weggeschnittenen Teil (63) zum Einführen des Lenksäulenrohrs (1) sowie ein rechteckiges Durchgangsloch (65) aufweist, in das das erste Gehäuse (41) eingeführt ist.

## Revendications

1. Ensemble de commutateur combiné comprenant :
- une unité formant commutateur (11,12) disposé autour d'un volant de direction et comprenant des éléments d'actionnement (19,21,28,29) pour actionner des charges du véhicule ;
- une unité formant capteur (38) connectée rigidement à ladite unité formant commutateur (11,12) et adaptée pour détecter une quantité de rotation dudit volant de direction ; et
- une bobine d'antenne (53)(51) pour recevoir des signaux d'ondes radio ,
**caractérisé en ce que**
- l'unité formant capteur (38) comprend un boîtier de capteur (39), qui est constitué par un premier boîtier en forme de boîte (41) et un second boîtier en forme de plaque plane (42) ;
- un premier panneau de circuits imprimés (46) est disposé dans le premier boîtier (41) et un second panneau de circuits imprimés (47) est prévu dans le second boîtier (42) ;
- la bobine d'antenne (53) (51) du véhicule est montée sur l'un des premier et second panneaux de circuits imprimée (46,47) ;
- une première cavité découpée (43) est formée dans le second boîtier (42) ;
- une seconde cavité correspondant à la première cavité (43) est formée à travers le second panneau de circuits imprimés (47), les première et seconde cavités (43) étant adaptées de telle sorte qu'un tube (1) de colonne de direction peut être inséré dans les cavités (43) ; et
- un connecteur (49) du capteur de l'angle de braquage et un connecteur d'antenne (54) sont disposés sur le second panneau de circuits imprimés (47) respectivement sur des côtés opposés de la seconde cavité.

2. Ensemble de commutateur combiné selon la revendication 1, **caractérisé en ce que** le premier boîtier (41) comporte une rainure (44) qui s'étend latéralement et dans laquelle un disque (33), qui possède une pluralité de trous traversants (34) disposés de façon équidistante dans la direction circonférentielle et est raccordé au volant de direction, peut être inséré de manière à pouvoir tourner.

3. Ensemble de commutateur combiné selon la revendication 2, **caractérisé en ce qu'**une pluralité de photo-interrupteurs sont montés dans le premier boîtier (41), chacun comprenant une diode électroluminescente et un élément de réception de lumière, qui sont situés en vis-à-vis dans la direction longitudinale, sur les deux côtés de la rainure.

4. Ensemble de commutateur combiné selon au moins l'une des revendications 1 à 3, **caractérisé en ce que** l'antenne (51). est montée sur une partie d'extrémité supérieure ou une partie d'extrémité inférieure du second panneau de circuits imprimés (47).

5. Ensemble de commutateur combiné selon au moins l'une des revendications 1 à 4, **caractérisé en ce que** l'antenne (51) est constituée par un mandrin (52) et une bobine d'antenne (53) enroulée autour du mandrin (52).

6. Ensemble de commutateur combiné selon au moins l'une des revendications 1 à 5, **caractérisé en ce que** d'autres connecteurs (56,57) pour établir une connexion mécanique et électrique avec des connecteurs respectifs (17,26) de l'unité formant commutateur (11,12) sont connectés mécaniquement et électriquement au second panneau de circuits imprimés (47).

7. Ensemble de commutateur combiné selon la revendication 6, **caractérisé en ce qu'**une unité centrale CPU pour une communication multiplexée est montée sur le panneau de circuits imprimés (46,47).

8. Ensemble de commutateur combiné selon au moins l'une des revendications 1 à 5, **caractérisé en ce que** l'unité formant commutateur (11,12) comprend un boîtier de commutateur (62) en forme de fer à cheval qui comporte une découpe (63) pour l'insertion du tube (1) de la colonne de direction et un trou traversant rectangulaire (65), dans lequel le premier boîtier (41) est inséré.
